# DEMANDE DE BREVET EUROPEEN

(11) **EP 3 690 383 A1**
(43) Date de publication de la demande: **05.08.2020**
(21) Numéro de dépôt: 19155196.9
(22) Date de dépôt: 04.02.2019
(51) Int. Cl.: F41H 11/02, B64C 39/02

(54) **SECTION OPERATIONNELLE DE VEHICULES BLINDES COMMUNIQUANT AVEC UNE FLOTTILLE DE DRONES**

(71) Demandeur: CMI Defence S.A., 4431 Loncin (BE)
(72) Inventeur: CLERMONT, Bernard, 4624 Fléron (BE)
(74) Mandataire: Pronovem

(57) **Abrégé**

La présente invention se rapporte à un système pour la réalisation d'une mission collaborative et intelligente assignée sur un espace déterminé, ledit système comprenant :
- une pluralité de bases (1, 2, 3, ...) capables de communiquer entre elles ;
- au moins un robot satellite (11, 21, 31, ...) associé à chacune des bases (1, 2, 3, ...), chaque robot satellite étant apte à exécuter la mission assignée ou une partie de la mission assignée, les différents robots constituant une flottille dont les membres sont capables de communiquer entre eux ;
- des moyens de communication, d'analyse et/ou de contrôle (400, 401, 402) affectés respectivement aux relations des bases (1, 2, 3, ...) entre elles, des robots (11, 21, 31, ...) entre eux et des bases avec les robots ;
la mission étant assignée par un moins une base à la flottille de robots (11, 21, 31, ...) dans une ou plusieurs zones déterminées, distales de la base ;
caractérisé en ce que, une fois la mission assignée aux robots satellites (11, 12, 13, ...) par la base (1, 2, 3, ...), les moyens de communication, d'analyse et/ou de contrôle (400, 401, 402) sont aptes à générer une action collaborative et autonome des robots de manière à mener à bien la mission de manière intelligente et rationnelle.

## Description

### Objet de l'invention

La présente invention se rapporte au domaine technologique des dispositifs de communication et de gestion d'une flottille de drones sur un théâtre d'opérations.

L'invention se rapporte également au domaine des véhicules terrestres militaires, comme par exemple une section de véhicules blindés, en communication avec une telle flottille de drones.

On entend par drone ou UAV (*unmanned aerial vehicle*) un aéronef sans pilote ou équipage le plus souvent télécommandé ou programmé. Les drones considérés ici sont généralement à usage militaire.

### Etat de la technique

Le document RU 2669248 C1 concerne le domaine des équipements militaires, notamment des véhicules blindés. Un char hautement protégé grâce à un système de contrôle par robots de combat au sol et UAVs se compose d'un corps blindé avec des éléments de protection dynamiques et plusieurs compartiments. Le compartiment de commande comprend les postes de travail du commandant, du mitrailleur et du chauffeur-mécanicien, constitué de cellules séparées et protégées avec trappes d'issue de secours situées dans les parties latérales. Le compartiment des armes à feu contient le système de conduite de tir avec pointage de cible et des dispositifs de suivi automatiques. En outre, le char est équipé d'une vision technique de jour et de nuit, d'un système de contrôle et d'information basé sur le char et de moyens de détection radio-électroniques. En outre, dans la conception du char, deux capsules protégées ont été introduites avec des postes de travail pour les opérateurs qui contrôlent les robots de combat au sol et les UAVs.

Le document US 2018/0341262 A1 divulgue un système permettant la protection active d'une cible vis-à-vis d'une menace. Le système comprend une ou plusieurs plateformes configurées pour diriger le fonctionnement du système, et un ou plusieurs véhicules aériens sans pilote (UAV) configurés pour opérer à proximité de la cible et pour permettre la détection et/ou la neutralisation de la menace. La plateforme est configurée pour détecter et fournir des instructions de neutralisation de la menace de manière autonome, et chacun des véhicules aériens sans pilote est configuré pour communiquer avec la plateforme.

Le document US 2018/0218617 A1 décrit des concepts et technologies concernant la gestion intelligente du trafic de drones via un réseau d'accès radio («RAN»). Un noeud RAN, tel qu'un eNodeB, peut recevoir, à partir d'un drone, une configuration de vol. La configuration de vol peut inclure un identifiant de drone et une route de drone. Le noeud RAN peut déterminer si une capacité est disponible dans un espace aérien associé au noeud RAN. En réponse à la détermination de la capacité disponible dans l'espace aérien associé au noeud RAN, le noeud RAN peut ajouter l'ID du drone à une file d'attente de drones en attente d'utilisation de l'espace aérien associé au noeud RAN. Lorsque l'ID du drone est le suivant dans la file des drones en attente d'utilisation de l'espace aérien associé au noeud RAN, le noeud RAN peut demander au drone de survoler au moins une partie de l'espace aérien conformément à l'itinéraire du drone.

Le document US 2010/0017046 A1 divulgue un système d'engagement collaboratif de véhicules aériens et terrestres non habités pour localiser, identifier et suivre une cible dans un certain nombre d'environnements urbains ou non urbains, sous la supervision d'un opérateur. Le système d'engagement collaboratif contrôle les véhicules non habités afin de maintenir une ligne de visée entre une cible prédéterminée et au moins un des véhicules non habités précités et confère aux véhicule des informations pour décider des positions qui vont maximiser les lignes de visée potentielles, de prédire avec le concours d'opérateurs où la cible va se rendre et permettre aux groupes de véhicules de collaborer en assurant une couverture totale de la cible. Le système se base sur une collaboration et une coordination entre véhicules terrestres et aériens, pour qu'au moins un des véhicules garde le contact avec la cible, au cas où la cible serait hors de vue des autres véhicules. Le système comporte ainsi un sous-système de contrôle facilitant le contrôle, la communication et l'échange de données vers et entre les véhicules non habités, via un protocole commun.

Le document US 9,852,639 B2 divulgue un système de génération de mission qui génère une trajectoire de vol se trouvant dans des frontières de la mission et qui incorpore la trajectoire de vol dans un plan optimisé de mission de reconnaissance pour capturer des images aériennes d'une cible en utilisant un UAV. Le système génère une mission basée sur des images de sites, des frontières et des scénarios de vol.

Le document US 2018/0319495 A1 divulgue un réseau de drones-relais permettant la communication de proche en proche sur longue distance ou en cas d'obstacle entre une station de base et un drone de travail.

Le document US 10,139,838 B2 divulgue un système de gestion logistique d'une pluralité de drones destinés à la livraison de produits à des clients. L'efficacité totale liée à la consommation de puissance et/ou au temps utilisé peut être contrôlée. On peut utiliser une informatique de « cloud » comme modèle de prestation de service pour permettre un accès pratique et à la demande à un ensemble de ressources informatiques partagées, qui peuvent être mises en oeuvre avec un effort de gestion minimal auprès du prestataire de services.

Le document US 2018/0107209 A1 présente un système de gestion d'un couple véhicule/drone où la présence du drone est gérée dans un espace d'accès en vol restreint ou régulé (militaire, aéroport) par l'assistance du véhicule au sol, qui permet au drone d'éviter le vol dans la zone en étant supporté par le véhicule au sol.

Le document US 2018/0364713 A1 divulgue un système de calcul et de contrôle du déploiement d'un ensemble de drones, avec assignation d'une route à chaque drone, contrôle de vol et d'arrivée à destination, en tenant compte de contraintes telles que la météo fournie par un service extérieur dans un environnement « cloud », de zones interdites de vol, ...

Le document US 2009/0157233 A1 divulgue un système autonome et prédictif de traçage et surveillance d'une cible par des UAVs, en vue d'éviter les erreurs d'opérateurs humains. Le système comprend un module de planification pour organiser le vol des UAVs.

### Buts de l'invention

La présente invention vise à répondre au besoin d'un utilisateur qui souhaite effectuer une reconnaissance de site au moyen de drones autonomes associés à des véhicules terrestres.

La présente invention vise en particulier à assurer l'efficience d'une mission de positionnement, de détection et/ou d'observation assurée par une section de bases terrestres associée à une flottille de drones.

L'invention vise encore à une utilisation rationnelle, optimisée et intelligente de l'ensemble des drones dans l'exécution d'une mission déterminée, en vue notamment de réduire le temps d'usage opérationnel de chaque drone.

L'invention a encore pour but de réduire la consommation énergétique des drones individuels lors de l'exécution d'une mission afin d'augmenter la durée de celle-ci.

### Principaux éléments caractéristiques de l'invention

Un premier aspect de la présente invention se rapporte à un système pour la réalisation d'une mission collaborative et intelligente assignée sur un espace déterminé, ledit système comprenant :
- une pluralité de bases capables de communiquer entre elles ;
- au moins un robot satellite associé à chacune des bases, chaque robot satellite étant apte à exécuter la mission assignée ou une partie de la mission assignée, les différents robots constituant une flottille dont les membres sont capables de communiquer entre eux ;
- des moyens de communication, d'analyse et/ou de contrôle affectés respectivement aux relations des bases entre elles, des robots entre eux et des bases avec les robots ;
la mission étant assignée par un moins une base à la flottille de robots dans une ou plusieurs zones déterminées, distales de la base ;
caractérisé en ce que, une fois la mission assignée aux robots satellites par la base, les moyens de communication, d'analyse et/ou de contrôle sont aptes à générer une action collaborative et autonome des robots de manière à mener à bien la mission de manière intelligente et rationnelle.

On entend, dans le contexte présent, par robot satellite un appareil à système de commande automatique, généralement électronique, ayant un lien d'assujettissement ou de dépendance avec la base à laquelle il est associé.

Selon des modes de réalisation préférés, le système de l'invention comprend en outre au moins une des caractéristiques suivantes ou une combinaison appropriée de plusieurs d'entre elles :
- les bases et les robots sont des engins terrestres, maritimes ou des aéronefs ;
- les bases sont des bases terrestres constituant une plateforme terrestre et les robots sont des drones constituant une plateforme aérienne ;
- la pluralité de bases terrestres ou plateforme terrestre est répartie en une ou plusieurs sections de véhicules blindés ;
- chaque section comprend entre 3 et 6 véhicules blindés ;
- la mission assignée est une mission de positionnement, d'observation et/ou de détection ou encore de neutralisation d'une menace ;
- lorsque la mission assignée est une mission de neutralisation, celle-ci est limitée à la neutralisation de drones adverses ou espions ;
- la communication entre les bases terrestres et les drones et/ou entre les drones entre eux est intermittente, les drones exécutant la mission intelligente de manière autonome ;
- dans le cas d'une mission effectuée par tous les drones dans une zone identique ou similaire, les moyens de communication, d'analyse et/ou de contrôle sont configurés pour que chaque drone effectue tout ou une partie de la mission à tour de rôle, ce qui permet d'augmenter la durée de la mission ;
- dans le cas d'une mission effectuée par les drones dans une multiplicité de zones distinctes, les moyens de communication, d'analyse et/ou de contrôle sont configurés pour assigner à chaque drone une partie de la mission dans une zone déterminée respective, ce qui permet une répartition rationnelle de la mission entre les différents drones, sans redondance ;
- les moyens de communication, d'analyse et/ou de contrôle affectés respectivement aux relations des bases terrestres entre elles, des drones entre eux et des bases terrestres avec les drones comprennent des moyens de communication radiofréquences bidirectionnels utilisant de préférence la technologie cellulaire 4G ou 5G ;
- le système comprend un poste de commandement virtuel situé dans une base terrestre ou dans un cloud ;
- le poste de commandement virtuel est apte à collecter des données et des besoins des plateformes terrestre et aérienne et à redéployer, répartir ou échanger de l'information entre les plateformes pour optimiser la continuité de la mission ;
- le poste de commandement virtuel est apte à gérer de façon autonomme les missions respectives de différentes sections de véhicules blindés et optimiser la coopération entre les sections et un ou plusieurs groupes de drones.

Un second aspect de la présente invention se rapporte à un procédé pour la réalisation d'une mission collaborative et intelligente assignée sur un théâtre d'opérations militaires déterminé, au moyen du système décrit ci-dessus, comprenant les étapes successives suivantes :
- une ou plusieurs bases terrestres communiquant entre elles par les moyens de communication, d'analyse et/ou de contrôle, définissent une mission à effectuer dans une ou plusieurs zones déterminées distales des bases et assignent cette mission à au moins une partie de la flottille de drones par les moyens de communication, d'analyse et/ou de contrôle, les drones étant déjà en vol ou prêts à décoller ;
- les drones communiquent entre eux, analysent la mission et gèrent l'exécution de la mission de manière autonome, collaborative et rationnelle grâce aux moyens de communication, d'analyse et/ou de contrôle, de manière à réaliser cette mission de façon optimisée dans l'espace et dans le temps.

Selon ce procédé, une fois que la mission a été assignée aux drones, ceux-ci en gèrent l'exécution par une autogestion autonome, collaborative et rationnelle, sans intervention humaine et sans une collaboration intense avec les bases terrestres ou l'environnement extérieur.

Avantageusement, tous les drones effectuent de manière séquentielle et à tour de rôle une mission identique ou similaire dans une zone donnée.

Toujours avantageusement, alternativement, les drones se répartissent une mission, en ce sens que chaque drone et uniquement lui effectue sa mission dans une zone spécifique.

### Brève description des figures

La figure 1 représente schématiquement le système selon l'invention pour la réalisation d'une mission collaborative et intelligente assignée sur un espace déterminé utilisant une section de véhicules blindés et une flottille de drones qui communiquent entre eux.

La figure 2 représente un exemple de mission d'observation où tous les drones vont observer la même zone à tour de rôle.

La figure 3 représente un exemple de mission d'observation où les différents drones vont observer une et une seule zone, toutes les zones étant différentes.

### Description détaillée de l'invention

Le système selon l'invention comprend une ou plusieurs bases terrestres. Il s'agit par exemple de véhicules militaires blindés ou de bases téléopérables tels que véhicules ou tourelles téléopérables. Une section de bases terrestres est typiquement une combinaison de véhicules dans un secteur déterminé, comprenant généralement 3 ou 4, au maximum 6 véhicules.

Chaque base terrestre est associée à un ou plusieurs drones. Par exemple, lorsque le drone n'est pas en vol, il peut se reposer sur une station appartenant à la base, sur laquelle il peut par exemple recharger sa batterie.

Les bases terrestres vont commander une mission, c'est-à-dire un ensemble de tâches à accomplir par les drones.

Dans le cadre de l'invention, la mission sera généralement une mission de positionnement, d'observation ou de détection, par exemple d'une menace. La mission peut également comprendre un aspect limité de neutralisation d'une menace, adapté aux moyens de neutralisation qui équipent éventuellement les drones, comme par exemple des moyens de neutralisation de drones espions.

Un système de contrôle va compiler les requêtes des demandeurs (bases terrestres) et les communiquer au système de gestion des drones qui va alors effectuer une optimisation de l'utilisation des drones et gérer le déploiement des drones pour remplir la ou les missions requises et enfin gérer le retour des informations requises auprès des demandeurs.

En d'autres termes, les drones s'organisent entre eux pour accomplir la mission définie et communiquée par les bases terrestres. Le système d'analyse et de gestion des drones et de la mission qui leur est attribuée est :
- autonome et intelligent : il se gère totalement ou partiellement par ses propres lois, de manière indépendante de tout opérateur humain ou de l'environnement extérieur ;
- collaboratif : basé sur la connectivité entre membres, il fait appel à la collaboration et à la participation de chacun de ses membres, notamment grâce à des outils informatiques adaptés au partage et à l'échange d'informations.

L'invention a pour objet de mettre en oeuvre un mixage des fonctionnalités d'autonomie de drones, avec une collaboration entre drones et systèmes terrestres pour effectuer la mission de positionnement, de détection et d'observation. La mission est sélectionnée par une ou plusieurs bases terrestres en communication réseau. La coordination entre drones se fait de manière automatique, basée sur une forte inter-connectivité des drones entre eux (paramètres de vol, autonomie, vision, etc.). Même si les drones sont capables de communiquer avec les bases (véhicules terrestres) ou un « cloud », ils doivent pouvoir, selon l'invention, s'autogérer à tout moment dans l'exécution de la mission par une collaboration entre eux et non par une collaboration intense et continue avec les bases au sol (contrairement à US 2010/0017046 A1).

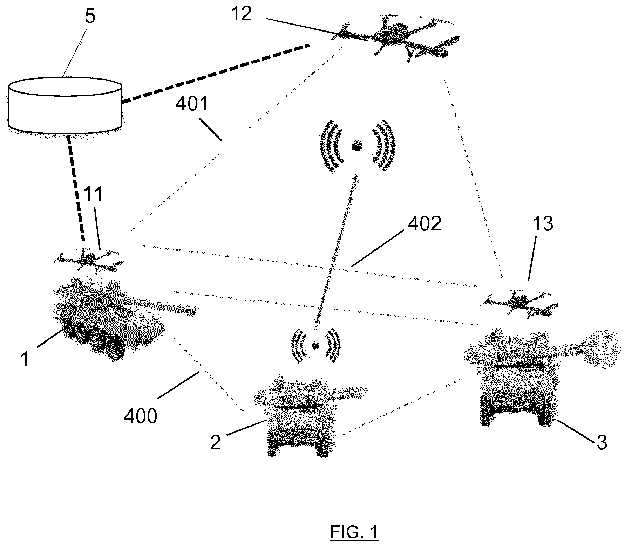

La figure 1 montre un exemple non limitatif d'une section opérationnelle de trois véhicules blindés 1, 2, 3, habités ou non habités, appelée aussi plateforme terrestre, associée à une escouade ou une flottille de drones 11, 12, 13, appelée aussi plateforme aérienne, chaque véhicule pouvant accueillir en mode repos au moins un drone lorsque celui-ci n'est pas en vol. Les véhicules sont capables de communiquer entre eux (triangle en tirets 400) et les drones sont également capables de communiquer entre eux (triangle en traits d'axe 401), des communications 402 existant bien entendu entre les bases et les drones.

Selon un aspect de l'invention, l'ensemble des drones est capable de s'organiser pour réagir de manière intelligente ou rationnelle aux ordres des véhicules. Les drones sont capables de se répartir entre eux la mission elle-même ou différentes parties de la mission demandée.

Selon un aspect de l'invention, un poste de commandement virtuel 5 sera avantageusement prévu, qui peut se situer dans la tourelle d'un des véhicules blindés ou plus généralement dans un « cloud ». Ce terme fait référence à un modèle d'organisation informatique dit « en nuage » (en anglais *cloud computing*) permettant l'accès à des ressources numériques dont le stockage est externalisé sur un ou plusieurs serveurs distants.

On entend par poste de commandement virtuel un poste de commandement regroupant des moyens informatiques matériels et logiciels reliés par des moyens de communication ainsi que des personnes responsables des opérations où tant les moyens informatiques matériels et logiciels que lesdits responsables sont dissociés et/ou ne se trouvent pas physiquement au même endroit. Le système de l'invention peut fonctionner en l'absence d'opérateurs humains dédiés, du moins sur le théâtre d'opérations.

Le poste de commandement virtuel 5 est apte à collecter les données et les besoins des plateformes terrestre et aérienne et redéploie, répartit ou échange des informations entre les plateformes pour optimiser la continuité de la mission.

Le poste de commandement virtuel 5 peut gérer de façon autonomme les missions respectives de différentes sections de véhicules blindés et optimiser la coopération entre les sections terrestres et groupes de drones.

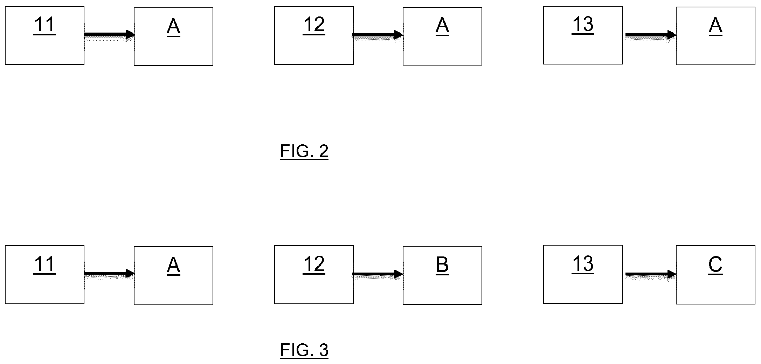

Dans un premier exemple opérationnel représenté sur la figure 2, dans le cas où tous les drones ont la même mission ou une mission similaire, comme l'observation d'une zone déterminée A, les drones 11, 12, 13, ... peuvent effectuer la mission à tour de rôle séquentiellement dans le temps, ce qui permet avantageusement d'augmenter la durée de la mission, compte tenu du fait que l'autonomie de vol d'un drone peut être limitée.

Dans un autre exemple opérationnel représenté sur la figure 3, les zones à observer peuvent être multiples. Ainsi une communication intelligente entre les drones et une répartition des tâches rationnelle permettent d'assigner à chaque drone une zone déterminée à observer. Par exemple, dans le cas de trois zones A, B, C à observer, le drone 11 va observer la zone A, le drone 12 la zone B et le drone 13 la zone C. Il s'agit d'un exemple simple de collaboration entre les différents drones pour accomplir la mission de façon optimale, en évitant toute redondance.

Il est essentiel que le système intelligent par lequel l'information est transmise vers les drones et entre les drones puisse opérer de façon ponctuelle ou discontinue (et donc non continue) pour pallier une tentative de brouillage éventuelle ou pallier toute coupure de communication pendant la mission. Ainsi, le système s'organise pour que la mission s'exécute de façon autonome et coordonnée.

Le système selon l'invention comprendra avantageusement un système de communication spécifique et dédié entre les bases, un système de gestion des communication entre drones, un système de gestion des activités des drones et des moyens de sécurisation des différents logiciels de communication. Les systèmes de communication radio seront des réseaux mobiles de type civil, militaire ou mixtes, par exemple 4G ou 5G.

Le système de l'invention peut être étendu et généralisé à un système robotisé comprenant un ensemble de bases terrestres, aériennes ou maritimes associé à un ensemble de robots satellites, également terrestres, aériens ou maritimes, au moins un robot étant associé à chaque base. L'ensemble des robots, auquel les bases assignent une mission déterminée, analysent la mission reçue des bases de façon autonome et gèrent celle-ci de manière collaborative, de sorte à réaliser cette mission de la façon la plus efficiente possible.

### Avantages de l'invention

Le système de communication entre bases, de préférence terrestres et robots, de préférence drones, selon l'invention possède les avantages suivants sur l'état de la technique :
- intégration de l'autonomie des drones ;
- autonomie sans intervention décisionnelle humaine ;
- indépendance du système ;
- coopération de façon coordonnée et optimisée entre un groupe de drones et un groupe de véhicules blindés.

## Revendications

1. Un système pour la réalisation d'une mission collaborative et intelligente assignée sur un espace déterminé, ledit système comprenant :
- une pluralité de bases (1, 2, 3, ...) capables de communiquer entre elles ;
- au moins un robot satellite (11, 21, 31, ...) associé à chacune des bases (1, 2, 3, ...), chaque robot satellite étant apte à exécuter la mission assignée ou une partie de la mission assignée, les différents robots constituant une flottille dont les membres sont capables de communiquer entre eux ;
- des moyens de communication, d'analyse et/ou de contrôle (400, 401, 402) affectés respectivement aux relations des bases (1, 2, 3, ...) entre elles, des robots (11, 21, 31, ...) entre eux et des bases avec les robots ;
la mission étant assignée par un moins une base à la flottille de robots (11, 21, 31, ...) dans une ou plusieurs zones déterminées, distales de la base ;
**caractérisé en ce que**, une fois la mission assignée aux robots satellites (11, 12, 13, ...) par la base (1, 2, 3, ...), les moyens de communication, d'analyse et/ou de contrôle (400, 401, 402) sont aptes à générer une action collaborative et autonome des robots de manière à mener à bien la mission de manière intelligente et rationnelle.

2. Le système selon la revendication 1, **caractérisé en ce que** les bases (1, 2, 3, ...) et les robots (11, 21, 31, ...) sont des engins terrestres, maritimes ou des aéronefs.

3. Le système selon la revendication 2, **caractérisé en ce que** les bases (1, 2, 3, ...) sont des bases terrestres constituant une plateforme terrestre et les robots (11, 21, 31, ...) sont des drones constituant une plateforme aérienne.

4. Le système selon la revendication 3, **caractérisé en ce que** la pluralité de bases terrestres ou plateforme terrestre (1, 2, 3, ...) est répartie en une ou plusieurs sections de véhicules blindés.

5. Le système selon la revendication 4, **caractérisé en ce que** chaque section comprend entre 3 et 6 véhicules blindés.

6. Le système selon la revendication 3, **caractérisé en ce que** la mission assignée est une mission de positionnement, d'observation et/ou de détection ou encore de neutralisation d'une menace.

7. Le système selon la revendication 6, **caractérisé en ce que**, lorsque la mission assignée est une mission de neutralisation, celle-ci est limitée à la neutralisation de drones adverses ou espions.

8. Le système selon la revendication 3, **caractérisé en ce que** la communication entre les bases terrestres (1, 2, 3, ...) et les drones (11, 12, 13, ...) et/ou entre les drones entre eux est intermittente, les drones exécutant la mission intelligente de manière autonome.

9. Le système selon la revendication 3, **caractérisé en ce que**, dans le cas d'une mission effectuée par tous les drones (11, 12, 13, ...) dans une zone identique ou similaire, les moyens de communication, d'analyse et/ou de contrôle (400, 401, 402, ...) sont configurés pour que chaque drone effectue tout ou une partie de la mission à tour de rôle, ce qui permet d'augmenter la durée de la mission.

10. Le système selon la revendication 3, **caractérisé en ce que**, dans le cas d'une mission effectuée par les drones (11, 12, 13, ...) dans une multiplicité de zones distinctes, les moyens de communication, d'analyse et/ou de contrôle (400, 401, 402) sont configurés pour assigner à chaque drone une partie de la mission dans une zone déterminée respective, ce qui permet une répartition rationnelle de la mission entre les différents drones, sans redondance.

11. Le système selon la revendication 3, **caractérisé en ce que** les moyens de communication, d'analyse et/ou de contrôle (400, 401, 402) affectés respectivement aux relations des bases terrestres entre elles (1, 2, 3, ...), des drones entre eux (11, 21, 31, ...) et des bases terrestres avec les drones comprennent des moyens de communication radiofréquences bidirectionnels utilisant de préférence la technologie cellulaire 4G ou 5G.

12. Le système selon la revendication 4, **caractérisé en ce qu'**il comprend en outre un poste de commandement virtuel (5) situé dans une base terrestre (1, 2, 3, ...) ou dans un cloud.

13. Le système selon la revendication 12, **caractérisé en ce que** le poste de commandement virtuel (5) est apte à collecter des données et des besoins des plateformes terrestre et aérienne et à redéployer, répartir ou échanger de l'information entre les plateformes pour optimiser la continuité de la mission.

14. Le système selon la revendication 13, **caractérisé en ce que** le poste de commandement virtuel (5) est apte à gérer de façon autonomme les missions respectives de différentes sections de véhicules blindés et optimiser la coopération entre les sections et un ou plusieurs groupes de drones (11, 12, 13, ...).

15. Un procédé pour la réalisation d'une mission collaborative et intelligente assignée sur un théâtre d'opérations militaires déterminé, au moyen du système selon l'une quelconque des revendications 3 à 11, comprenant les étapes successives suivantes :
- une ou plusieurs bases terrestres (1, 2, 3, ...) communiquant entre elles par les moyens de communication, d'analyse et/ou de contrôle (400), définissent une mission à effectuer dans une ou plusieurs zones déterminées distales des bases et assignent cette mission à au moins une partie de la flottille de drones (11, 12, 13, ...) par les moyens de communication, d'analyse et/ou de contrôle (402), les drones étant déjà en vol ou prêts à décoller ;
- les drones (11, 12, 13, ...) communiquent entre eux, analysent la mission et gèrent l'exécution de la mission de manière autonome, collaborative et rationnelle grâce aux moyens de communication, d'analyse et/ou de contrôle (401), de manière à réaliser cette mission de façon optimisée dans l'espace et dans le temps.

16. Le procédé selon la revendication 15, **caractérisé en ce que**, une fois que la mission a été assignée aux drones (11, 12, 13, ...), ceux-ci en gèrent l'exécution par une autogestion autonome, collaborative et rationnelle, sans intervention humaine et sans une collaboration intense avec les bases terrestres (1, 2, 3, ...) ou l'environnement extérieur.

17. Le procédé selon la revendication 15, **caractérisé en ce que** tous les drones (11, 12, 13, ...) effectuent de manière séquentielle et à tour de rôle une mission identique ou similaire dans une zone donnée.

18. Le procédé selon la revendication 15, **caractérisé en ce que** les drones (11, 12, 13, ...) se répartissent une mission, en ce sens que chaque drone et uniquement lui effectue sa mission dans une zone spécifique.
